# FASCICULE DE BREVET EUROPEEN

(11) **EP 3 256 267 B1**
(45) Date de publication et mention de la délivrance du brevet: **09.01.2019**
(21) Numéro de dépôt: 16705235.6
(22) Date de dépôt: 26.01.2016
(51) Int. Cl.: B07C 1/00

(54) **INSTALLATION POUR LA SEPARATION ET L'INDIVIDUALISATION D'OBJETS POSTAUX HETEROGENES AVEC UN SYSTEME DE VISION A SOURCES LASER**
EINRICHTUNG ZUM SEPARIEREN UND VEREINZELN VON HETEROGENEM POSTGUT MIT EINEM LASER-BASIERTEN SICHTSYSTEM
DEVICE FOR SEPARATING AND INDIVIDUALISING POSTAL OBJECTS WITH LASER-BASED VISION SYSTEM

(30) Priorité: 11.02.2015 FR 1551123
(43) Date de publication de la demande: 20.12.2017
(73) Titulaire: Solystic, 92220 Bagneux (FR)
(72) Inventeur: EL BERNOUSSI, Hicham, 75015 Paris (FR); CREST, Karine, 26800 Etoile Sur Rhone (FR); PHILIPPE, Agnès, 94300 Vincennes (FR)
(74) Mandataire: Prugneau, Philippe
(86) Numéro de dépôt international: PCT/FR2016/050149
(87) Numéro de publication internationale: WO 2016/128637

(56) Documents cités:
- DE-A1-102007 038 834
- US-B1- 7 161 688

## Description

### Domaine technique

La présente invention concerne une installation de séparation et d'individualisation d'objets postaux du type petits colis ou paquets.

L'installation selon l'invention est en particulier destinée à être utilisée pour alimenter une machine de tri postal automatique dans laquelle les colis ou paquets individualisés sont déplacés en série à pas constant le long des sorties de tri de la machine et sont aiguillés chacun vers une sortie de tri appropriée en fonction de l'adresse de livraison qui est apposée sur le colis ou paquet.

### Technique antérieure

On connaît des solutions pour la séparation et l'individualisation d'objets telles que décrites dans les documents DE 10 2007 038834 et US 7 161 688, selon lesquelles des objets chargés en vrac dans une trémie sont déversés en continu sur des tapis, rouleaux et autres convoyeurs mécaniques et sont égrenés au fur et à mesure de leur déplacement sur ces convoyeurs. Les objets égrenés peuvent ensuite être prélevés un à un pour être mis en série dans un convoyeur à tapis par exemple. Ce type d'installation d'égrenage présente l'inconvénient d'être encombrant.

Dans le domaine postal, les petits colis ou paquets sont des objets essentiellement hétérogènes, à savoir avec des dimensions et des formes très variables et il est important de les mettre en série avec un pas constant, c'est-à-dire avec une distance constante entre le front avant de deux objets consécutifs en série ou entre les centres de deux objets consécutifs, pour pouvoir aiguiller automatiquement et facilement chaque objet vers une sortie de tri d'une machine de tri.

### Résumé de l'invention

Le but de l'invention est donc de proposer une installation de séparation et d'individualisation d'objets postaux hétérogènes du type petits colis ou paquets qui présente un faible encombrement et qui permet de mettre en série ces objets avec un pas constant en entrée d'une machine de tri postal.

A cet effet, l'invention a pour objet une installation de séparation et d'individualisation d'objets postaux hétérogènes du type petits colis ou paquets, caractérisée en ce qu'elle comprend :
- une plateforme pour stocker un tas d'objets postaux disposés en vrac,
- un système de vision adapté pour former des images numériques du tas d'objets postaux,
- une unité de traitement de données adaptée pour, à partir de ces images numériques, identifier un objet postal à individualiser lequel présente une face de préhension non recouverte,
- et une tête de préhension pneumatique d'un bras robotisé qui est pilotée pour prendre cet objet postal à individualiser par la face de préhension, et pour déposer cet objet postal sur une zone de dépose hors de la plateforme,
   et en ce que ledit système de vision comprend au moins une source laser qui projette sur le tas d'objets postaux un faisceau de lignes laser déployées en éventail,
   et en ce que l'unité de traitement de données est adaptée pour identifier l'objet postal à individualiser à partir d'une image du tas d'objets postaux comportant lesdites lignes laser d'une image du tas d'objets postaux en contraste.

Dans cette installation, le tas d'objets postaux est statique sur la plateforme et les objets postaux sont séparés un à un par le bras robotisé jusqu'au dernier objet du tas d'objets. Un nouveau tas d'objets postaux en vrac est ensuite reformé sur la plateforme et les objets postaux de ce nouveau tas d'objets postaux sont séparés un à un comme précédemment. A chaque fois qu'un objet postal est prélevé du tas d'objets postaux, le système de vision forme une image du tas d'objets postaux restants sur la plateforme de manière à déterminer un nouvel objet postal à prélever du tas d'objets postaux.

Les images numériques du tas d'objets comportant les lignes laser et les images numériques en contraste du tas d'objets permettent à l'unité de traitement de données de calculer une carte de profondeurs qui permet d'obtenir les coordonnées spatiales de la face de préhension de l'objet à individualiser et notamment l'altitude de son barycentre.

Le bras robotisé peut déposer chaque objet postal prélevé du tas sur un convoyeur à tapis en mouvement à une vitesse fixe prédéterminée, le bras robotisé étant synchronisé avec ce convoyeur à tapis pour que les objets soient disposés en série sur le tapis du convoyeur avec un pas constant.

L'installation selon l'invention peut encore présenter les particularités suivantes :
- ledit système de vision peut comprendre deux sources laser qui projettent respectivement sur le tas d'objets postaux un faisceau de premières lignes laser déployées en éventail et un faisceau de secondes lignes laser déployées en éventail et croisant les premières lignes laser. Les premières et secondes lignes laser forment alors un quadrillage projeté sur le tas d'objets postaux ce qui permet à l'unité de traitement de données de déterminer facilement, selon un principe de triangulation, la carte de profondeurs.
- ledit système de vision peut comprendre une première source laser qui projette sur le tas d'objets postaux un faisceau de premières lignes laser déployées en éventail et une deuxième source laser qui projette sur le tas d'objets postaux un faisceau de deuxièmes lignes laser déployées en éventail et croisant les premières lignes laser, et en outre une troisième source laser qui projette sur le tas d'objets postaux un faisceau de troisièmes lignes laser déployées en éventail et une quatrième source laser qui projette sur le tas d'objets postaux un faisceau de quatrièmes lignes laser déployées en éventail et croisant les troisièmes lignes laser, l'écartement angulaire entre les premières lignes laser étant différent de l'écartement angulaire entre les troisièmes lignes laser et l'écartement angulaire entre les deuxièmes lignes laser étant différent de l'écartement angulaire entre les quatrièmes lignes laser, et le système de vision étant adapté pour former une première image numérique du tas d'objets postaux comportant les premières et deuxièmes lignes laser et pour former une deuxième image numérique du tas d'objets postaux comportant les troisièmes et quatrièmes lignes laser, et pour former aussi une image numérique en contraste du tas d'objets postaux, l'unité de traitement de données étant adaptée pour identifier l'objet postal à individualiser à partir desdites première et deuxième images du tas d'objets postaux comportant lesdites lignes laser et de l'image en contraste.

Avec ces écartements angulaires différents, l'unité de traitement de données peut initialiser la carte de profondeurs et le détourage numérique des objets avec un quadrillage à plus faible résolution et affiner avec une meilleure précision les résultats avec le quadrillage à plus haute résolution.

Avantageusement les première et troisième sources laser et les deuxième et quatrième sources laser seront placées en regard pour s'affranchir de l'effet des ombres portées.

Selon une réalisation particulière de l'invention, les sources laser projettent respectivement et en même temps des lignes laser mais avec des couleurs différentes et par un filtrage couleur on sépare dans les images les lignes laser d'une couleur et les lignes laser d'une autre couleur.

Le système de vision peut être agencé pour éteindre alternativement deux des quatre sources laser quand il prend une image du tas d'objets comportant le quadrillage des lignes laser projetées par les deux autres sources laser.

Les première et deuxième sources laser peuvent être agencées par exemple pour projeter sur le tas d'objets postaux un quadrillage de 25x25 lignes laser et la troisième et la quatrième source laser peuvent être agencées pour projeter sur le tas d'objets un quadrillage de 63x63 lignes laser.

L'invention s'étend encore à une machine de tri postal qui comprend une installation telle que définie plus haut en amont d'un convoyeur de tri à godets dans lequel les colis ou petits paquets sont déplacés devant des réceptacles de tri.

### Présentation sommaire des dessins

L'invention est exposée ci-après plus en détail et illustrée par les dessins qui représentent un exemple d'installation pour la séparation et l'individualisation de petits colis ou paquets postaux selon l'invention.
La figure 1 est une vue schématique de l'installation selon l'invention avec un bras robotisé qui vient séparer et individualiser des objets postaux en tas sur une plateforme.
La figure 2 illustre très schématiquement la tête de préhension du bras robotisé.
La figure 3 illustre le système de vision comportant la caméra et les sources laser qui génèrent un quadrillage sur le tas d'objets postaux en vrac.
La figure 4 illustre le processus d'acquisition et de traitement d'images selon l'invention.
La figure 5 illustre une image brute produite par le système de vision avec un quadrillage en basse résolution.

### Description des modes de réalisation

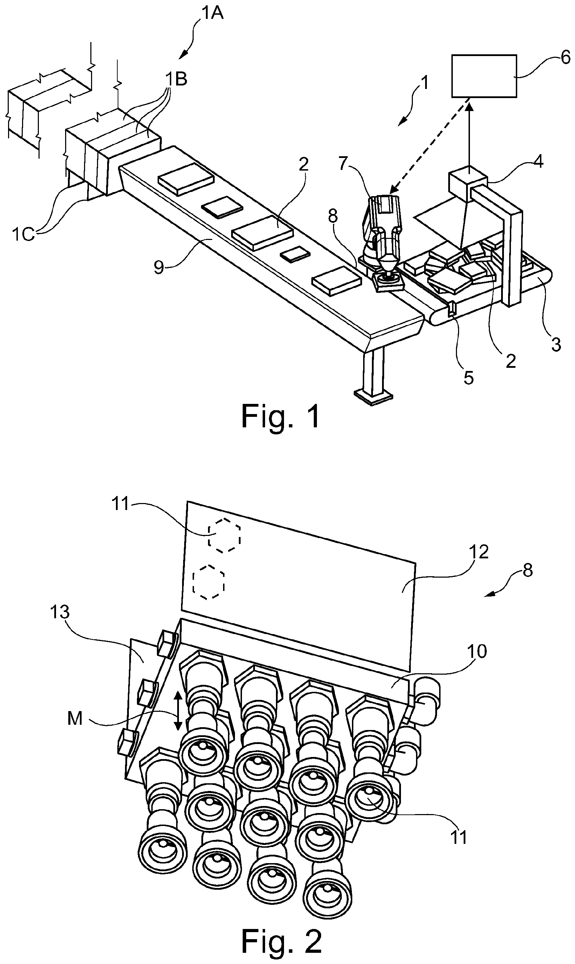

Sur la figure 1 des dessins, l'installation 1 selon l'invention est bien adaptée pour alimenter en petits colis ou paquets 2 une machine de tri postal automatique dans laquelle les colis ou paquets 2 sont déplacés en série à pas constant, par exemple à l'aide d'un convoyeur 1A à godets 1B avec des godets dont le fond est fermé par un volet.

Des sorties de tri 1C, par exemple des bacs, sont disposées sous et le long du convoyeur à godets.

Chaque sortie de tri correspond à une certaine destination de livraison postale. En fonction de l'adresse de livraison qui a été lue sur chaque colis ou paquet individualisé, ce colis ou paquet est déchargé d'un godet vers la sortie de tri correspondante en ouvrant automatiquement le volet dans le fond du godet quand le godet surplombe cette sortie de tri.

L'installation de séparation et d'individualisation d'objets postaux selon l'invention comprend ici une plateforme pour stocker un tas d'objets postaux disposés en vrac.

La plateforme est ici constituée par un convoyeur à tapis 3 qui est adapté pour être chargé en amont avec un tas d'objets postaux et amener ce tas d'objets postaux sous un système de vision 4.

Une fois que le tas d'objets postaux se trouve sous le système de vision 4, ce qui peut être détecté par un capteur optique 5, le convoyeur à tapis 3 est arrêté et donc le système de vision observe un tas d'objets postaux qui est statique.

Le système de vision est conçu pour former des images numériques de ce tas d'objets postaux statiques qui est observé depuis le dessus.

Un traitement d'image est effectué sur les images numériques dans une unité de traitement de données 6 qui est aussi une unité de contrôle/commande et de pilotage pour le bras robotisé 7.

L'unité 6 est programmée pour identifier un objet à individualiser du tas d'objets en vrac. Cet objet à individualiser est celui qui présente une face de préhension, généralement une face rectangulaire plane, qui n'est pas recouverte par un autre objet du tas d'objets et qui est orientée de préférence en direction du haut du tas d'objets. Cet objet à individualiser peut être par exemple celui qui se situe au sommet du tas d'objets.

L'unité 6 est programmée pour calculer, par une analyse de scène, différentes données indicatives de la position spatiale de cette face de préhension (position spatiale du barycentre de cette face) par rapport à la plateforme 3, l'orientation dans l'espace de cette face de préhension et les deux dimensions (longueur et largeur) de cette face de préhension.

A partir de ces données, l'unité 6 pilote le bras robotisé 7 qui est muni d'une tête de préhension pneumatique 8 pour soulever l'objet à individualiser par la face de préhension et le déposer en un point de dépose hors de la plateforme, ici en un emplacement prédéterminé à l'extrémité d'un convoyeur à plat 9.

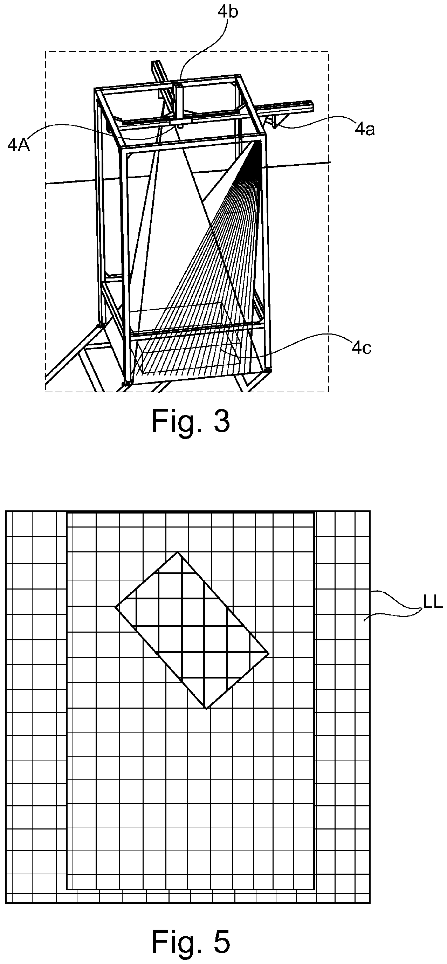

Sur la figure 3, on a illustré de façon très schématique le système de vision selon l'invention qui comprend outre la caméra 4A qui peut être une caméra en niveaux de gris ou en couleur, ici deux sources laser 4a,4b montées sur un bâti au-dessus de la plateforme 3 et qui projettent chacune sur le tas d'objets un faisceau de lignes laser déployées en éventail. Les lignes laser sont obliques par rapport à l'axe de la caméra et chaque ligne éclaire les objets postaux avec un certain angle d'incidence.

Plus particulièrement, les dimensions de la scène observée 4c par la caméra du système de vision 4 peuvent être de 600mmx600mm en surface horizontale et 150mm en hauteur et la caméra avec les sources laser 4a,4b peut être montée à 1,5m au-dessus de la scène à observer.

L'angle d'incidence des lignes laser peut varier de 7,2° à 33,8° avec un pas angulaire de 1,15°. Ici, comme les deux sources laser 4a, 4b sont décalées à 90°, elles projettent ensembles un motif en forme de quadrillage à la surface des objets postaux. Les sources laser 4a, 4b peuvent par exemple projeter un quadrillage à basse résolution de 25x25 lignes laser. Selon l'invention, un autre couple de sources laser peut être prévu pour projeter un autre quadrillage à haute résolution de 63x63 lignes laser.

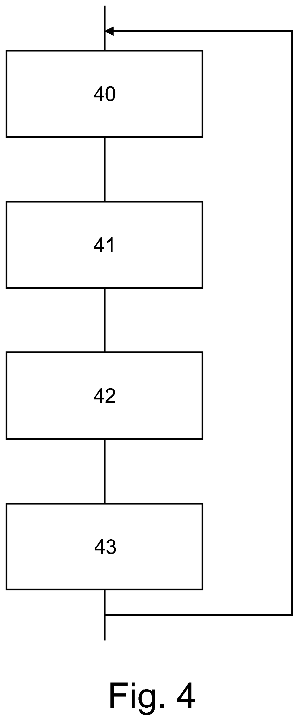

En pratique comme illustré sur la figure 4 et selon un mode préféré de réalisation de l'invention, pour chaque phase d'identification d'un objet postal à prélever du tas d'objet postaux disposés sur la plateforme 3, le système de vision 4 est commandé pour former en 40 une première image numérique en contraste ne comportant pas de lignes laser. Cette première image numérique est stockée en mémoire dans l'unité de traitement 6.

Une seconde image numérique du tas d'objets postaux recouvert du quadrillage laser à la basse résolution de 25x25 lignes laser, est formée en 41 par le système de vision 4 et est stockée en mémoire dans l'unité de traitement 6. Un exemple d'image numérique avec un quadrillage de lignes laser LL est illustré sur la figure 5.

Une troisième image numérique du tas d'objets postaux recouvert du quadrillage laser à la haute résolution de 63x63 lignes laser, est formée en 42 par le système de vision 4 et est stockée en mémoire dans l'unité de traitement 6.

A partir de ces trois images numériques de la scène observée par le système de vision 4, l'unité 6 est apte à réaliser en 43 un détourage numérique de la face de préhension non recouverte de l'objet postal à prélever et à évaluer de façon précise sa position spatiale en calculant une carte de profondeurs.

Il est entendu par détourage numérique, la fonction qui délimite chaque objet postal dans un plan (x, y) et par carte de profondeurs, une carte qui donne une altitude (z) pour chaque point de ce plan.

Le principe de la construction de la carte de profondeur dans l'unité 6 repose sur le fait qu'en l'absence d'objet sur la plateforme 3, les lignes laser occupent des positions de références. Comme ces lignes lasers sont projetées avec un angle d'incidence variant de 7,2° à 33,8° par pas de 1,15°, elles subissent un décalage (des cassures) en présence des objets sur la scène à analyser (ce décalage est visible sur la figure 5). Ce décalage est proportionnel à la hauteur de l'objet analysé. Or ce décalage est mesuré par le système de vision 4 dont la résolution dépend de la hauteur d'observation. Comme on ne connaît pas à l'avance la hauteur d'observation au-dessus de la scène, on peut construire un abaque de référence, permettant de calculer la hauteur en fonction du décalage observé pour chacune des lignes laser.

Dans l'étape 43 de traitement d'images, on procède par exemple à une correction des distorsions géométriques de l'optique de la caméra du système de vision 4 dans chaque image numérique. L'image en contraste subit une extraction de contour et les images avec les lignes laser sont binarisées, filtrées, convoluées avec des noyaux directionnels (horizontaux et verticaux) pour filtrer successivement les lignes et les colonnes du quadrillage, et intersectées pour réaliser par analyse de connexité et par dilatation de contour le détourage numérique de la face de préhension de l'objet à prélever dans l'image en contraste. Une transformée de Hough 3D peut être appliquée aux images numériques convoluées pour la reconstruction de la carte de profondeurs.

Selon l'invention, la tête de préhension pneumatique 8 est à géométrie variable, c'est-à-dire à surface de préhension variable. En particulier, sur la figure 2, la tête de préhension comporte une plaque principale 10 munie d'une pluralité de ventouses 11. Ces ventouses 11 peuvent être individuellement mobiles transversalement au plan de la plaque 10 comme illustré par la flèche M pour s'adapter à un profil non planaire de la face de préhension de l'objet à individualiser.

Au moins deux volets articulés (symbolisés par 12, 13) avec chacun muni d'une pluralité de ventouses telles que 11 peuvent être prévus sur deux côtés opposés de la plaque principale 10 de sorte que la surface de préhension de la tête peut être asservie aux dimensions de la face de préhension de l'objet à individualiser en déployant ou en relevant individuellement chaque volet ce qui améliore la préhension de l'objet à individualiser.

Plus particulièrement, l'objet à individualiser peut être saisi avec la plaque principale 11 de la tête de préhension, ou encore avec la plaque principale 11 et un volet 12 déployé (l'autre étant relevé), ou encore avec la plaque principale 11 et les deux volets 12,13 déployés.

A partir des données d'orientation spatiale et de dimension de la face de préhension, l'unité 6 est apte à saisir l'objet à individualiser en orientant la plaque principale 11 dans le sens de la grande longueur de la face de préhension et à déposer cet objet en orientant la grande longueur de sa face de préhension avec l'axe longitudinal du convoyeur à plat 9.

Par ailleurs, l'unité 6 est apte à positionner le barycentre de la plaque principale 10 de la tête de préhension en coïncidence avec le barycentre de la face de préhension de l'objet à individualiser et à faire déposer cet objet par le bras robotisé sur une référence de synchronisation sur le convoyeur à plat 9 pour maintenir un pas constant entre deux objets consécutif sur ce convoyeur à plat.

## Revendications

1. Installation de séparation et d'individualisation d'objets postaux hétérogènes du type petits colis ou paquets (2), comprenant
- une plateforme (3) pour stocker un tas d'objets postaux disposés en vrac,
- un système de vision (4) adapté pour former des images numériques du tas d'objets postaux,
- une unité (6) de traitement de données adaptée pour, à partir de ces images numériques, identifier un objet postal à individualiser lequel présente une face de préhension non recouverte,
- une tête de préhension pneumatique (8) d'un bras robotisé qui est pilotée pour prendre cet objet postal à individualiser par la face de préhension, et pour déposer cet objet postal sur une zone de dépose hors de la plateforme,
ledit système de vision comprenant au moins une source laser qui projette sur le tas d'objets postaux un faisceau (4a;4b) de lignes laser,
**caractérisé en ce que** les lignes laser sont déployées en éventail,
et **en ce que** l'unité de traitement de données est adaptée pour identifier l'objet postal à individualiser à partir d'une image du tas d'objets postaux comportant lesdites lignes laser et d'une image en contraste du tas d'objets postaux.

2. Installation selon la revendication 1, **caractérisée en ce que** ledit système de vision (4) comprend une première source laser qui projette sur le tas d'objets postaux un faisceau (4a) de premières lignes laser déployées en éventail et une deuxième source laser qui projette sur le tas d'objets postaux un faisceau (4b) de deuxièmes lignes laser déployées en éventail et croisant les premières lignes laser.

3. Installation selon la revendication 1, **caractérisée en ce que** ledit système de vision comprend une première source laser qui projette sur le tas d'objets postaux un faisceau de premières lignes laser déployées en éventail et une deuxième source laser qui projette sur le tas d'objets postaux un faisceau de deuxièmes lignes laser déployées en éventail et croisant les premières lignes laser, ledit système de vision comprenant en outre une troisième source laser qui projette sur le tas d'objets postaux un faisceau de troisièmes lignes laser déployées en éventail et une quatrième source laser qui projette sur le tas d'objets postaux un faisceau de quatrièmes lignes laser déployées en éventail et croisant les troisièmes lignes laser, l'écartement angulaire entre les premières lignes laser étant différent de l'écartement angulaire entre les troisièmes lignes laser et l'écartement angulaire entre les deuxièmes lignes laser étant différent de l'écartement angulaire entre les quatrièmes lignes laser, et **en ce que** le système de vision est adapté pour former une première image numérique du tas d'objets postaux comportant les premières et deuxièmes lignes laser et pour former une seconde image numérique du tas d'objets postaux comportant les troisièmes et quatrièmes lignes laser et pour former une troisième image numérique en contraste du tas d'objets postaux, et **en ce que** l'unité de traitement de données est adaptée pour identifier l'objet postal à individualiser à partir desdites première, deuxième images du tas d'objets postaux comportant lesdites lignes laser. et de la troisième image du tas d'objets postaux en contraste.

4. Installation selon la revendication 3, **caractérisée en ce que** les première et troisième sources laser et les deuxième et quatrième sources laser sont placées en regard.

5. Installation selon la revendication 3 ou 4, **caractérisée en ce que** les première et deuxième sources laser sont agencées pour projeter sur le tas d'objets postaux un quadrillage de 25x25 lignes laser et les troisième et quatrième sources laser sont agencées pour projeter sur le tas d'objets un quadrillage de 63x63 lignes laser.

6. Installation selon l'une des revendications précédentes, **caractérisée en ce que** les lignes laser (LL) sont orientées en direction de la plateforme avec un angle incident variant de 7,2° à 33,8° par pas de 1,15° par rapport à l'axe de la caméra du système de vision.

7. Machine de tri postal, **caractérisée en ce qu'**elle comprend une installation selon l'une des revendications précédentes en amont d'un convoyeur de tri à godets (1A) dans lequel les colis ou petits paquets sont déplacés devant des réceptacles de tri.

## Patentansprüche

1. Einrichtung zum Separieren und Vereinzeln von heterogenen postalischen Gegenständen der Art Päckchen oder Pakete (2), umfassend
- eine Plattform (3) zum Lagern eines Haufens durcheinander angeordneter postalischer Gegenstände,
- ein Sichtsystem (4), das ausgebildet ist, um digitale Bilder des Haufens postalischer Gegenstände zu erzeugen,
- eine Datenverarbeitungseinheit (6), die ausgebildet ist, um ausgehend von diesen digitalen Bildern einen zu vereinzelnden postalischen Gegenstand mit nicht bedeckter Grifffläche zu identifizieren,
- einen pneumatischen Greifkopf (8) eines Roboterarms, der gesteuert ist, um diesen zu vereinzelnden postalischen Gegenstand an der Grifffläche zu greifen und diesen postalischen Gegenstand auf einer Ablagezone außerhalb der Plattform abzulegen,
wobei das Sichtsystem wenigstens eine Laserquelle umfasst, die auf den Haufen postalischer Gegenstände einen Strahl (4a; 4b) von Laserlinien projiziert,
**dadurch gekennzeichnet,**
**dass** die Laserlinien fächerförmig ausgebreitet sind, und
**dass** die Datenverarbeitungseinheit ausgebildet ist zum Identifizieren des zu vereinzelnden postalischen Gegenstands ausgehend von einem die Laserlinien umfassenden Bild des Haufens postalischer Gegenstände und von einem kontrastierenden Bild des Haufens postalischer Gegenstände.

2. Einrichtung nach Anspruch 1, **dadurch gekennzeichnet, dass** das Sichtsystem (4) eine erste Laserquelle, die auf den Haufen postalischer Gegenstände einen Strahl (4a) von fächerförmig ausgebreiteten ersten Laserlinien projiziert, und eine zweite Laserquelle, die auf den Haufen postalischer Gegenstände einen Strahl (4b) von fächerförmig ausgebreiteten zweiten Laserlinien projiziert, die die ersten Laserlinien kreuzen, umfasst.

3. Einrichtung nach Anspruch 1, **dadurch gekennzeichnet, dass** das Sichtsystem eine erste Laserquelle, die auf den Haufen postalischer Gegenstände einen Strahl von fächerförmig ausgebreiteten ersten Laserlinien projiziert, und eine zweite Laserquelle, die auf den Haufen postalischer Gegenstände einen Strahl von fächerförmig ausgebreiteten zweiten Laserlinien projiziert, die die ersten Laserlinien kreuzen, umfasst, wobei das Sichtsystem ferner eine dritte Laserquelle, die auf den Haufen postalischer Gegenstände einen Strahl von fächerförmig ausgebreiteten dritten Laserlinien projiziert, und eine vierte Laserquelle, die auf den Haufen postalischer Gegenstände einen Strahl von fächerförmig ausgebreiteten vierten Laserlinien projiziert, die die dritten Laserlinien kreuzen, umfasst, wobei der Winkelabstand zwischen den ersten Laserlinien von dem Winkelabstand zwischen den dritten Laserlinien verschieden ist, und wobei der Winkelabstand zwischen den zweiten Laserlinien von dem Winkelabstand zwischen den vierten Laserlinien verschieden ist, und dass das Sichtsystem ausgebildet ist zum Bilden eines die ersten und zweiten Laserlinien umfassenden ersten digitalen Bildes des Haufens postalischer Gegenstände und zum Bilden eines die dritten und vierten Laserlinien umfassenden zweiten digitalen Bildes des Haufens postalischer Gegenstände und zum Bilden eines kontrastierenden dritten digitalen Bildes des Haufens postalischer Gegenstände, und dass die Datenverarbeitungseinheit ausgebildet ist zum Identifizieren des zu vereinzelnden postalischen Gegenstands ausgehend von den die Laserlinien umfassenden ersten, zweiten Bildern des Haufens postalischer Gegenstände und von dem kontrastierenden dritten Bild des Haufens postalischer Gegenstände.

4. Einrichtung nach Anspruch 3, **dadurch gekennzeichnet, dass** die ersten und dritten Laserquellen und die zweiten und vierten Laserquellen gegenüberliegend angeordnet sind.

5. Einrichtung nach Anspruch 3 oder 4, **dadurch gekennzeichnet, dass** die ersten und zweiten Laserquellen ausgebildet sind zum Projizieren eines Rasters von 25 x 25 Laserlinien auf den Haufen postalischer Gegenstände, und dass die dritten und vierten Laserquellen ausgebildet sind zum Projizieren eines Rasters von 63 x 63 Laserlinien auf den Haufen von Gegenständen.

6. Einrichtung nach einem der vorhergehenden Ansprüche, **dadurch gekennzeichnet, dass** die Laserlinien (LL) in Richtung auf die Plattform mit einem Einfallswinkel gerichtet sind, der von 7,2° bis 33,8° in Schritten von 1,15° in Bezug auf die Achse der Kamera des Sichtsystems variiert.

7. Postsortiermaschine, **dadurch gekennzeichnet, dass** sie eine Einrichtung nach einem der vorhergehenden Ansprüche stromaufwärts eines Bechersortierförderers (1A), in dem die Päckchen oder kleinen Pakete vor den Sortierbehältnissen verlagert werden, umfasst.

## Claims

1. An installation for separating and singulating non-uniform postal articles of the small parcel or packet type (2), comprising:
• a platform (3) for storing a pile of loosely placed postal articles;
• a vision system (4) adapted to form digital images of the pile of loose postal articles;
• a data processor unit (6) adapted to identify a postal article to be singulated that has a non-covered pickup face, on the basis of said digital images; and
• a pneumatic pickup head (8) of a robotized arm that is controlled to take said postal article to be singulated via its pickup face, and to deposit said postal article on a deposition zone that is off the platform;
said vision system including at least one laser source that projects laser lines (4a; 4b) onto the pile of postal articles,
**characterized in that** said laser lines are fanned out, and **in that** the data processor unit is adapted to identify the postal article to be singulated on the basis of an image of the pile of postal articles that includes said laser lines, and on the basis of a contrast image of the pile of postal articles.

2. An installation according to claim 1, **characterized in that** said vision system (4) includes a first laser source that projects onto the pile of postal articles a beam (4a) of first fanned-out laser lines, and a second laser source that projects onto the pile of postal articles a beam (4b) of second fanned-out laser lines that intersect the first laser lines.

3. An installation according to claim 1, **characterized in that** said vision system includes a first laser source that projects onto the pile of postal articles a beam of first fanned-out laser lines, and a second laser source that projects onto the pile of postal articles a beam of second fanned-out laser lines that intersect the first laser lines, said vision system further including a third laser source that projects onto the pile of postal articles a beam of third fanned-out laser lines, and a fourth laser source that projects onto the pile of postal articles a beam of fourth fanned-out laser lines that intersect the third laser lines, the angular spacing between the first laser lines being different from the angular spacing between the third laser lines, and the angular spacing between the second laser lines being different from the angular spacing between the fourth laser lines, and **in that** the vision system is adapted to form a first digital image of the pile of postal articles that includes the first and second laser lines, and to form a second digital image of the pile of postal articles that includes the third and fourth laser lines, and to form a contrast third digital image of the pile of postal articles, and **in that** the data processor unit is adapted to identify the postal article to be singulated on the basis of said first and second images of the pile of postal articles that include said laser lines, and on the basis of the contrast third image of the pile of postal articles.

4. An installation according to claim 3, **characterized in that** the first and third laser sources and the second and fourth laser sources are placed mutually facing one another.

5. An installation according to claim 3 or claim 4, **characterized in that** the first and second laser sources are arranged to project onto the pile of postal articles a grid of 25 × 25 laser lines, and the third and fourth laser sources are arranged to project onto the pile of articles a grid of 63 × 63 laser lines.

6. An installation according to any preceding claim, **characterized in that** the laser lines (LL) are directed towards the platform at angles of incidence varying from 7.2° to 33.8° in steps of 1.15° relative to the axis of the camera of the vision system.

7. A postal sorting machine, **characterized in that** it includes an installation according to any preceding claim upstream from a sorting bin conveyor (1A) in which the small packets or parcels are moved past sorting receptacles.
